# EUROPÄISCHE PATENTSCHRIFT

(11) **EP 3 158 242 B1**
(45) Veröffentlichungstag und Bekanntmachung des Hinweises auf die Patenterteilung: **23.10.2019**
(21) Anmeldenummer: 15737970.2
(22) Anmeldetag: 16.06.2015
(51) Int. Cl.: F16K 31/40

(54) **VENTIL, INSBESONDERE SERVOVENTIL**
VALVE, PARTICULARLY SERVO VALVE
VALVE, EN PARTICULIER SERVOVALVE

(30) Priorität: 17.06.2014 DE 102014108529
(43) Veröffentlichungstag der Anmeldung: 26.04.2017
(73) Patentinhaber: A. u. K. Müller GmbH & Co. KG, 40595 Düsseldorf (DE)
(72) Erfinder:
(74) Vertreter: Feder Walter Ebert
(86) Internationale Anmeldenummer: PCT/DE2015/100242
(87) Internationale Veröffentlichungsnummer: WO 2015/192833

(56) Entgegenhaltungen:
- EP-A1- 0 235 451
- WO-A1-96/11350
- WO-A1-2005/108840
- WO-A1-2009/100484
- US-A- 3 140 727
- US-A- 3 763 881
- US-A- 3 934 816

## Beschreibung

Die vorliegende Erfindung betrifft ein Ventil, insbesondere Servoventil, mit einem über ein Schließelement schließbaren Ventilsitz und einem Vorsteuerventil, über welches das Schließelement zwischen einer Offen- und einer Schließstellung schaltbar ist. Einen weiteren Gegenstand der Erfindung bildet ein Verfahren zum Schalten eines Ventils, insbesondere Servoventils, mit einem über ein Schließelement schließbaren Ventilsitz und einem Vorsteuerventil, über welches das Schließelement zwischen einer Offen- und einer Schließstellung schaltbar ist.

Derartige Ventile werden in vielen Bereichen der Technik, beispielsweise in sanitären Einrichtungen, in Getränkeautomaten oder in ähnlichen Vorrichtungen zur Steuerung von Fluidströmen und insbesondere von Wasserströmen eingesetzt.

Der zu steuernde Fluidstrom wird über einen Einlass in das Innere des Ventils geführt, welches einen über ein Schließelement schließbaren Ventilsitz aufweist, der sich im Strömungsweg zwischen dem Einlass und dem Auslass des Ventils befindet. Solange das Schließelement auf dem Ventilsitz sitzt, befindet sich dieses in einer Schließstellung, d. h. der Strömungsweg zwischen dem Einlass und dem Auslass des Ventils ist versperrt. Sobald das Schließelement von dem Ventilsitz abhebt, befindet es sich in einer Offenstellung, in welcher der Weg für das Fluid vom Einlass über den Ventilsitz in Richtung des Auslasses freigegeben ist.

Bei eigenmediumbetätigten Ventilen wird zum Öffnen bzw. Schließen des Ventils der Druck des in dem Ventil strömenden Fluids genutzt. Hierzu wird das Fluid in der Schließstellung des Ventils durch das Schließelement hindurch in einen Druckraum auf der dem Ventilsitz gegenüberliegenden Seite des Schließelements geführt, so dass sich das Schließelement unter dem Druck des Fluids dichtend gegen den Ventilsitz anlegt. Über ein gegenüber dem eigentlichen Ventil deutlich kleiner ausgebildetes Vorsteuerventil kann eine Druckentlastungsöffnung des Druckraums angesteuert werden. Durch Öffnen der Druckentlastungsbohrung mittels des Vorsteuerventils ändern sich die Druckverhältnisse innerhalb des Ventils. Der Druck innerhalb des Druckraums fällt deutlich ab und das Schließelement hebt aufgrund des größeren Drucks des in das Ventil einströmenden Fluids von dem Ventilsitz ab.

Der Vorteil solcher eigenmediumbetätigter Ventile liegt darin, dass sich vergleichsweise große Ventile durch Ausnutzung des Drucks des zu schaltenden Fluids über das vom Aufbau her deutlich kleinere, mit der Druckentlastungsbohrung zusammenwirkende Vorsteuerventil mit vergleichsweise geringem Kraftaufwand schalten lassen.

WO 96/11350 A1 offenbart ein Ventil mit einem bistabilen schwenkbaren Hebel, der über eine Spule angesteuert wird.

**Aufgabe** der vorliegenden Erfindung ist es, den Kraftaufwand zum Schalten des Ventils mittels des Vorsteuerventils noch weiter zu reduzieren.

Diese Aufgabe wird mit einem Ventil gemäß Anspruch 1 gelöst.

Über den Hebel lassen sich durch entsprechende Ausnutzung der Hebelverhältnisse die erforderlichen Kräfte zum Öffnen und Schließen der Druckentlastungsbohrung und damit zum Schalten des Schließelements reduzieren.

Eine vorteilhafte Ausgestaltung sieht vor, dass der Hebel einen Kern und einen den Kern zumindest teilweise umgebenden Mantel aus Dichtmaterial aufweist. Der Kern kann aus einem härteren Material, beispielsweise aus Metall, Kunststoff oder ähnlichen Materialien bestehen. Der Mantel aus Dichtmaterial weist eine gegenüber dem Kern geringere Härte auf und dient zum Abdichten der Druckentlastungsbohrung. Insbesondere kann der Mantel aus einem Elastomermaterial, aus Gummi oder ähnlichen Materialien bestehen.

Erfindungsgemäß weist der Hebel ein Betätigungsende und ein Entlastungsende auf. Das Bestätigungsende des Hebels wirkt mit einem axial bewegbaren Betätigungselement des Vorsteuerventils zusammen. Bei Betätigung über das Bestätigungselement wird ein Druck auf das Betätigungsende des Hebels ausgeübt und dieser beginnt zu verschwenken. Das Entlastungsende wirkt mit der Druckentlastungsbohrung dichtend zusammen. Beispielsweise kann das Entlastungsende als Dichtstopfen ausgebildet sein. Bei Bewegung des Betätigungsendes verschwenkt das Entlastungsende in entgegengesetzter Richtung, wodurch die Druckentlastungsbohrung geöffnet bzw. geschlossen wird.

Eine weitere Ausgestaltung sieht vor, dass der Hebel ein Hebellager aufweist, um welches der Hebel verschwenkbar gelagert ist. Um das Hebellager kann der Hebel nach Art einer Wippe definiert verschwenkt werden.

In diesem Zusammenhang ist es von Vorteil, wenn das Hebellager den Hebel in zwei Hebelarme unterteilt, vorzugsweise in einem Verhältnis von 1 bis 4 zu 1, bevorzugter im Bereich von 1,5 bis 2,5 zu 1 und noch bevorzugter in einem Verhältnis von 1,5 bis 2 zu 1, wobei der längere Hebelarm das Betätigungsende aufweist. Hierdurch ergibt sich eine günstige Übertragung der auf das Betätigungsende einwirkenden Kraft auf das am gegenüberliegenden Ende des Hebels angeordnete Entlastungsende.

Eine weitere Ausgestaltung sieht vor, dass das Hebellager Teil eines Dichtelements ist. Das Dichtelement kann beispielsweise von einem O-Ringförmigen Bauteil gebildet werden.

In diesem Zusammenhang ist es weiterhin von Vorteil, wenn das Dichtelement von dem Hebel durchstoßen wird, wobei das Dichtelement das Entlastungsende des Hebels umschließt. Auf diese Weise ist es möglich, den Hebel teilweise im trockenen, teilweise im mediendurchströmten Teil des Ventils anzuordnen.

Die Erfindung sieht vor, dass das Betätigungsende im trockenen Bereich des Ventils und das Entlastungsende im mediendurchströmten Bereich des Ventils angeordnet sind. Während das mit der Druckentlastungsbohrung wirkende Entlastungsende im mediendurchströmten Teil des Ventils liegt, liegt der andere Teil des Hebels im trockenen Bereich des Ventils. Hierdurch lässt sich der im Bereich des Vorsteuerventils von dem Fluid durchströmte Raum gering halten. Es ergibt sich eine unter hygienischen Aspekten vorteilhafte, da geringvolumige und nur wenig Stagnationswasserbereiche bedingende Konstruktion.

Von Vorteil ist ferner eine Konstruktion, bei welcher das Entlastungsende mit einer Druckentlastungsbohrung zusammenwirkt, die einen Entlastungskanal freigibt, der sich als Bypass zwischen dem Einlass und dem Auslass des Ventils erstreckt. Auf diese Weise lassen sich die Druckverhältnisse innerhalb des Ventils ändern und das Schließelement zwischen dessen Offen- und Schließstellung auf einfache, wenig kraftaufwändige Weise schalten, wozu der Druck des anliegenden Fluids genutzt wird.

Die Erfindung sieht ferner vor, dass das Belastungsende über eine Spule angesteuert wird. Durch Bestromen der Spule kann ein auf das Betätigungsende einwirkendes Betätigungselement, beispielsweise ein als Magnetanker ausgebildeter Plunger, auf einfache Weise bewegt werden. Die hierzu erforderlichen elektrischen Leistungen sind aufgrund der Hebelverhältnisse vergleichsweise gering, insbesondere da das Betätigungsende des Hebels einen größeren Abstand zum Hebellager aufweist als das Entlastungsende.

In diesem Zusammenhang sieht die Erfindung vor, dass die Spule mit einem Permanentmagneten derart zusammenwirkt, dass das Betätigungsende durch kurzzeitige Bestromung der Spule zwischen zwei Endlagen bistabil hin und her bewegbar ist. Auf diese Weise lässt sich das Betätigungselement durch kurzzeitige und damit wenig Energie verzehrende Betätigung der Spule zwischen zwei Endlagen hin und her bewegen. Durch einmaliges Ansteuern der Spule kann das Betätigungselement in dessen erste Endlage verbracht werden. Durch nochmaliges Ansteuern kann es dann bei Bedarf in eine zweite Endlage überführt werden. Hierdurch kann das Betätigungselement des Vorsteuerventils und mit diesem das Schließelement des Ventils auf einfache Weise zwischen dessen Offen- und Schließstellung hin und her bewegt werden.

Alternativ ist es auch denkbar, dass das Betätigungsende über ein mechanisches Element, insbesondere ein Tastelement, angesteuert wird. Bei diesem kann es sich beispielsweise um ein mit einer Kugelschreibermechanik versehenes Tastelement handeln. Auch andere mechanische Elemente wären denkbar, beispielsweise ein Spindelantrieb oder ähnliche Elemente.

In konstruktiver Weiterbildung wird schließlich vorgeschlagen, dass der Einlass und der Auslass entlang einer Hauptventilachse koaxial zueinander angeordnet sind, wobei das Betätigungsende koaxial zur Hauptachse und das Druckentlastungsende gegenüber der Hauptventilachse versetzt angeordnet ist. Es ergibt sich eine symmetrische Anordnung innerhalb eines Koaxialservoventils, wobei das Betätigungsende des Hebels gegenüber der Hauptventilachse seitlich versetzt angeordnet ist.

Die vorstehend genannte Aufgabe wird auch durch ein Verfahren nach Anspruch 9 gelöst. Auch hierdurch ergeben sich die bereits im Zusammenhang mit dem Ventil erläuterten Vorteile.

Eine vorteilhafte Ausgestaltung des Verfahrens sieht vor, dass das Ventil gemäß einem oder mehreren der vorstehend genannten Merkmale ausgebildet ist.

Weitere Einzelheiten und Vorteile eines erfindungsgemäßen Ventils sowie des entsprechenden Verfahrens werden nachfolgend unter Zuhilfenahme der beigefügten Zeichnungen eines Ausführungsbeispiels erläutert werden. Darin zeigen:
- Fig. 1: ein erfindungsgemäßes Ventil in dessen Schließstellung in geschnittener Seitenansicht und
- Fig. 2: in vergrößerter Ansicht eine Darstellung des Hebels des Vorsteuerventils.

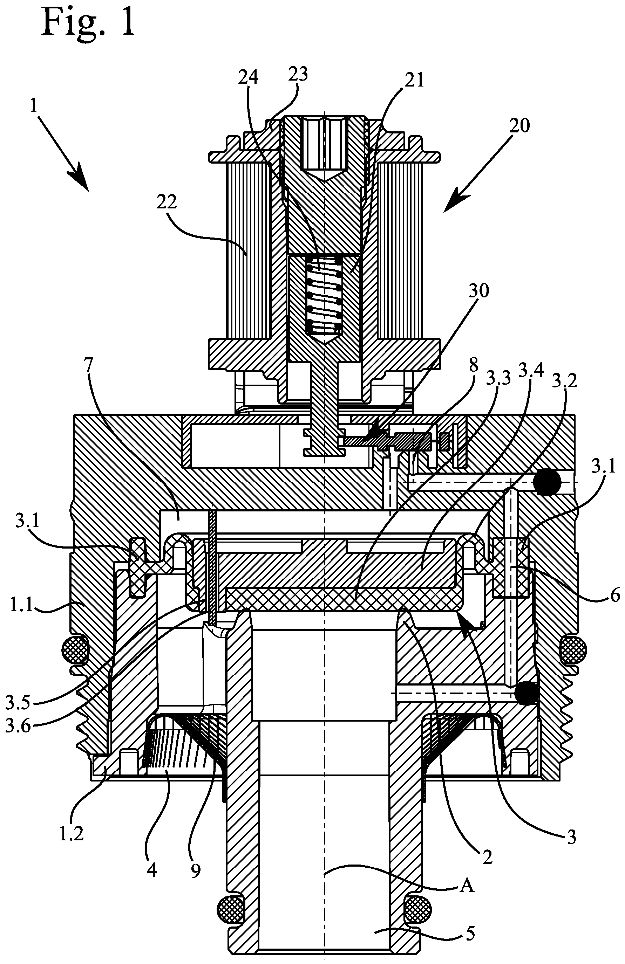

Fig. 1 zeigt in geschnittener Seitenansicht ein als Kartuschenventil ausgebildetes Ventil 1, bei welchem es sich um ein eigenmediumbetätigtes Servoventil handelt.

Das Ventil 1 weist einen Einlass 4 auf, der über einen ringzylindrischen Ventilsitz 2 mit einem Auslass 5 strömungsverbunden ist. Der radial weiter außen liegende Einlass 4 und der radial innen liegende Auslass 5 sind koaxial zu einer Hauptventilachse A angeordnet, wobei im Bereich des Einlasses 4 ein Sieb 9 zum Zurückhalten von Verunreinigungen, Schmutzpartikeln und ähnlichem vorgesehen ist.

In der Darstellung gemäß Fig. 1 ist das Ventil 1 in dessen Schließstellung dargestellt, in welcher der Ventilsitz 2 über das Schließelement 3 abgedichtet ist, so dass der Strömungsweg vom Einlass 4 zum Auslass 5 versperrt und das Ventil 1 geschlossen ist.

Bei dem Schließelement 3 handelt es sich um eine zumindest teilweise aus einem gummielastischen Material bestehende Membrane. Das Schließelement 3 ist in dessen Randbereichen 3.1 gegenüber zwei Gehäuseteilen 1.1, 1.2 des Ventils 1 unter Klemmwirkung dichtend festgelegt. Der Randbereich 3.1. bildet insoweit einen Dichtabschnitt. Der Randbereich 3.1 geht nach radial innen über einen als Rollbereich ausgebildeten Übergangsbereich 3.2 in den Mittelbereich 3.3 des Schließelements 3 über, welcher zur Abdichtung gegenüber dem Ventilsitz 2 dient. Im Mittelbereich 3.3 ist zusätzlich ein Körper 3.4 von in etwa plattenförmiger Geometrie vorgesehen, welcher oberhalb des Gummimaterials des Schließelements 3 angeordnet und zur Versteifung in dieses eingebettet ist.

Über den Einlass 4 tritt das Medium unter einem gewissen Druck über das Sieb 9 in das Innere des Ventils 1 ein. Über eine in dem Schließelement 3 vorgesehene Öffnung 3.5 tritt das Medium in einen Druckraum 7 oberhalb des membranartigen Schließelements 3 ein. Innerhalb der Öffnung 3.5 ist ein bürstenartiges Reinigungselement 3.6 vorgesehen, welches die Öffnung 3.5 bei jeder Bewegung des Schließelements 3 reinigt, beispielsweise von Kalkablagerungen und ähnlichen Verunreinigungen, so dass stets eine Strömungsverbindung zwischen dem Einlauf 4 und dem Druckraum 7 besteht.

Der Druckraum 7 ist auf der dem Ventilsitz 2 gegenüberliegenden Seite des membranförmigen Schließelements 3 angeordnet und befindet sich auf dem gleichen Druckniveau wie der Einlauf 4. Da der Druck innerhalb des Einlasses 4 bzw. des Druckraums 7 höher ist als jener des Auslaufs 5 wird das Schließelement 3 unter dem Einfluss des zu schaltenden Mediums von oben her auf den Ventilsitz 2 gedrückt.

Um den Strömungsweg zwischen dem Einlauf 4 und dem Auslauf 5 über den Ventilsitz 2 freizugeben, ist es erforderlich, den Druck innerhalb des Druckraums 7 abzusenken, so dass das Schließelement 3 unter dem Einfluss des über den Einlauf 4 von unten her anstehenden Drucks von dem Ventilsitz 2 abhebt. Hierzu ist eine in Fig. 1 im rechten Bildrand dargestellte Druckentlastungsbohrung 8 vorgesehen, von welcher aus sich ein Druckentlastungskanal 6 als Bypass zwischen dem Druckraum 7 und dem Auslass 5 erstreckt. Durch Öffnen bzw. Schließen der Druckentlastungsbohrung 8 lassen sich die Druckverhältnisse innerhalb der Ventils 1 derart ändern, dass sich das Schließelement 3 von dem Ventilsitz 2 abhebt oder sich dichtend an diesen anlegt.

Beim Öffnen der Druckentlastungsbohrung 8 fällt der Druck innerhalb des Druckraums 7 ab und das innerhalb des Druckraums 7 befindliche Fluid entweicht einem Druckgefälle folgend über die Druckentlastungsbohrung 8 und den der Druckentlastungsbohrung 8 strömungstechnisch nachgeschalteten Entlastungskanal 6 in Richtung des Auslaufs 5. Durch den Druck des über den Einlauf 4 nachströmenden, sich unterhalb des Schließelements 3 stauenden Fluids, hebt das Schließelement 3 in Richtung des druckfreien Druckraums 7 von dem Ventilsitz 2 ab und gibt auf diese Weise den direkten Strömungsweg zwischen dem Einlauf 4 und dem Auslauf 5 frei. In dieser Stellung ist das Ventil 1 geöffnet.

Zum Schließen des Ventils 1 wird die Druckentlastungsbohrung 8 geschlossen. Hierdurch steigt der Druck im Druckraum 7 wieder an und das Schließelement 3 legt sich von oben her dichtend gegen den Ventilsitz 2 an, bis die in Fig. 1 dargestellte Stellung erreicht ist.

Zum Öffnen bzw. Schließen der Druckentlastungsbohrung 8 ist ein als Hebelventil ausgebildetes Vorsteuerventil 20 vorgesehen, welches das Öffnen bzw. Schließen der Druckentlastungsbohrung 8 mit geringem Kraftaufwand erlaubt.

Dieses teilweise auch als Pilotventil bezeichnete Vorsteuerventil 20 weist ein axial bewegbares Betätigungselement 21 auf, welches in Richtung der Hauptventilachse A hin und her bewegbar angeordnet ist. Das freie Ende des Betätigungselements 21 ist mit einem wippenartig gelagerten Hebel 30 gekoppelt, auf welchen im Folgenden noch näher einzugehen sein wird.

Zur Ansteuerung des Betätigungselements 21 und damit zur Bestätigung des Hebels 30 ist eine oberhalb eines Jochs 23 angeordnete Spule 22 vorgesehen. Beim Ausführungsbeispiel ist die Anordnung der Spule 22 derart gewählt, dass diese im Zusammenspiel mit einem in Fig. 1 nicht dargestellten Magneten, der beispielsweise oberhalb eines Jochs 23 des Vorsteuerventils 20 angeordnet sein kann, sowie einer Feder 24 eine bistabile Ansteuerung des Betätigungselements 21 ermöglicht. Durch die bistabile Ausbildung kann das Betätigungselement 21 durch kurzes, impulsweises Bestromen der Spule 22 zwischen zwei definierten Endlagen hin und her bewegt werden. Hierdurch ergibt sich eine wenig Energie erfordernde Schaltmöglichkeit zur Betätigung des Hebels 30. Über den Hebel 30 wirkt das Betätigungselement 21 in kraftgünstiger Weise auf die Druckentlastungsbohrung 8 ein.

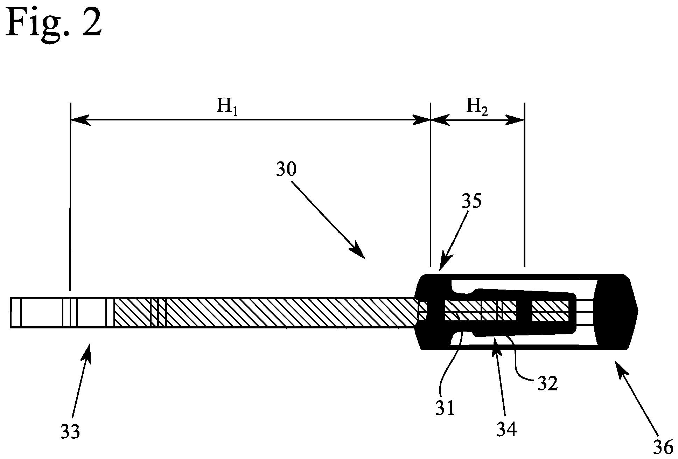

Der Hebel 30 bildet eine Art Schaltwippe, vgl. auch Fig. 2. Das Bestätigungsende 33 des Hebels 30 ist mit dem axial bewegbaren Betätigungselement 21 des Vorsteuerventils 20 derart gekoppelt, dass das Betätigungsende 33 den axialen Bewegungen des Betätigungselements 21 folgt. Durch Verschwenken des Betätigungsendes 33 schwenkt das gegenüberliegende Entlastungsende 34 in entgegengesetzter Richtung und öffnet bzw. schließt die Druckentlastungsbohrung 8. Das Druckentlastungsende 34 ist von einem gummielastischen Dichtmaterial ummantelt und von stopfen- bzw. pfropfenförmiger Geometrie.

Zwischen dem Betätigungsende 33 und dem Druckentlastungsende 34 befindet sich ein Hebellager 35, um welches der Hebel 30 verschwenkbar gelagert ist. Das Hebellager 35 wird gebildet von einem Dichtelement 36, welches beim Ausführungsbeispiel nach Art einer das Entlastungsende 34 umgebenden O-Ring-Dichtung ausgebildet ist. Der Hebel 30 durchstößt das Dichtelement 36, so dass sich dessen Entlastungsende 34 innerhalb des Dichtelements 36 befindet. Dieser Bereich des Hebels 30 wird vom Medium umströmt. Das Betätigungsende 33 des Hebels 30 befindet sich auf der anderen Seite des Dichtelements 36 im trockenen Bereich des Ventils 1, wodurch sich ein vergleichsweise geringes mediumdurchströmtes Volumen im Bereich der Druckentlastungsbohrung 8 ergibt.

Um eine kraftgünstige, wenig Betätigungsenergie erfordernde Betätigung der Druckentlastungsbohrung 8 zu ermöglichen, teilt das Hebellager 35 den Hebel 30 in zwei unterschiedlich lange Hebelarme, wobei das Betätigungsende 33 an dem längeren Hebelarm angeordnet ist, so dass sich günstigere Kraftverhältnisse einstellen. Beim Ausführungsbeispiel ist der das Betätigungsende 33 aufweisende Hebelarm in etwa viermal so groß wie der das Entlastungsende 34 aufweisende Hebelarm.

Durch die Ansteuerung des Schließelements 3 bzw. der Druckentlastungsöffnung 8 über einen schwenkbar gelagerten Hebel 30 ergeben sich günstige Kraftverhältnisse, was insbesondere bei batteriebetätigten Ventilen 1 von Vorteil ist und eine kleine Bauweise des Vorsteuerventils 20 erlaubt.

### Bezugszeichen:

- 1: Ventil
- 1.1: Gehäuseteil
- 1.2: Gehäuseteil
- 2: Ventilsitz
- 3: Schließelement
- 3.1: Randbereich
- 3.2: Übergangsbereich
- 3.3: Mittelbereich
- 3.4: Körper
- 3.5: Öffnung
- 3.6: Ring
- 4: Einlass
- 5: Auslass
- 6: Entlastungskanal
- 7: Druckraum
- 8: Druckentlastungsbohrung
- 9: Sieb
- 20: Vorsteuerventil
- 21: Betätigungselement
- 22: Spule
- 23: Joch
- 24: Feder
- 30: Hebel
- 31: Kern
- 32: Mantel
- 33: Bestätigungsende
- 34: Entlastungsende
- 35: Hebellager
- 36: Dichtelement

- A: Hauptventilachse
- H₁: Hebelarm
- H₂: Hebelarm

## Patentansprüche

1. Ventil, insbesondere Servoventil, mit einem über ein Schließelement (3) schließbaren Ventilsitz (2) und einem Vorsteuerventil (20), über welches das Schließelement (3) zwischen einer Offen- und einer Schließstellung schaltbar ist, wobei das Vorsteuerventil (20) einen schwenkbar gelagerten Hebel (30) zum Schalten des Schließelements (3) aufweist, der ein Betätigungsende (33) und ein Entlastungsende (34) aufweist, wobei das Betätigungsende (33) über eine Spule (22) angesteuert wird, wobei die Spule (22) mit einem Permanentmagneten derart zusammenwirkt, dass das Betätigungsende (33) durch kurzzeitige Bestromung der Spule (22) zwischen zwei Endlagen bistabil hin und her bewegbar ist,
**dadurch gekennzeichnet,**
**dass** das Betätigungsende (33) im trockenen Bereich des Ventils (1) und das Entlastungende (34) im mediendurchströmten Bereich des Ventils (1) angeordnet ist.

2. Ventil nach Anspruch 1, **dadurch gekennzeichnet, dass** der Hebel (30) einen Kern (31) und einen den Kern (31) zumindest teilweise umgebenden Mantel (32) aus Dichtmaterial aufweist.

3. Ventil nach einem der Ansprüche 1 bis 2, **dadurch gekennzeichnet, dass** der Hebel (30) ein Hebellager (35) aufweist, um welches der Hebel (30) verschwenkbar gelagert ist.

4. Ventil nach Anspruch 3, **dadurch gekennzeichnet, dass** das Hebellager (35) den Hebel (30) in zwei Hebelarme unterteilt, vorzugsweise in einem Verhältnis von 1 bis 4 zu 1, bevorzugter im Bereich von 1,5 bis 2,5 zu 1 und noch bevorzugter in einem Verhältnis von 1,5 bis zu 1, wobei der längere Hebelarm das Betätigungsende (33) aufweist.

5. Ventil nach einem der Ansprüche 3 oder 4, **dadurch gekennzeichnet, dass** das Hebellager (35) Teil eines Dichtelements (36) ist.

6. Ventil nach Anspruch 5, **dadurch gekennzeichnet, dass** das Dichtelement (36) von dem Hebel (30) durchstoßen wird, wobei das Dichtelement (36) das Entlastungsende (34) des Hebels (30) umschließt.

7. Ventil nach einem der vorhergehenden Ansprüche, **dadurch gekennzeichnet, dass** das Entlastungsende (34) mit einer Druckentlastungsbohrung (8) zusammenwirkt, die einen Entlastungskanal (6) frei gibt, der sich als Bypass zwischen dem Einlass (4) und dem Auslass (5) des Ventils (1) erstreckt.

8. Ventil nach einem der vorhergehenden Ansprüche, **dadurch gekennzeichnet, dass** der Einlass (4) und der Auslass (5) entlang einer Hauptventilachse (A) koaxial zueinander angeordnet sind, wobei das Betätigungsende (33) koaxial zur Hauptventilachse (A) und das Druckentlastungsende (34) gegenüber der Hauptventilachse (A) versetzt angeordnet ist.

9. Verfahren zum Schalten eines Ventils (1), insbesondere Servoventils, mit einem über ein Schließelement (3) schließbaren Ventilsitz (2) und einem Vorsteuerventil (20), über welches das Schließelement (3) zwischen einer Offen- und einer Schließstellung schaltbar ist, wobei das Vorsteuerventil (20) über einen schwenkbar gelagerten Hebel (30) geschaltet wird, der ein Betätigungsende (33) und ein Entlastungsende (34) aufweist, wobei das Betätigungsende (33) über eine Spule (22) angesteuert wird, wobei die Spule (22) mit einem Permanentmagneten derart zusammenwirkt, dass das Betätigungsende (33) durch kurzzeitige Bestromung der Spule (22) zwischen zwei Endlagen bistabil hin und her bewegt wird,
**dadurch gekennzeichnet,**
**dass** das Betätigungsende (33) im trockenen Bereich des Ventils (1) und das Entlastungende (34) im mediendurchströmten Bereich des Ventils (1) angeordnet ist.

10. Verfahren nach Anspruch 9, **dadurch gekennzeichnet, dass** das Ventil (1) nach einem der Ansprüche 1 bis 8 ausgebildet ist.

## Claims

1. Valve, in particular a servo valve, having a valve seat (2) which can be closed by a closing element (3) and having a pilot-control valve (20) via which the closing element (3) can be switched between an open and a closed position, wherein the pilot-control valve (20) has a pivotably mounted lever (30) for switching the closing element (3), which lever (30) has an actuating end (33) and a relief end (34), wherein the actuating end (33) is activated by a coil (22), wherein the coil (22) interacts with a permanent magnet in such a way that the actuating end (33) can be moved back and forth in a bistable manner between two end positions by brief energization of the coil (22),
**characterized**
**in that** the actuating end (33) is arranged in the dry region of the valve (1), and the relief end (34) is arranged in the fluid-traversed region of the valve (1).

2. Valve according to Claim 1, **characterized in that** the lever (30) has a core (31) and a sheath (32) of sealing material which at least partially surrounds the core (31).

3. Valve according to either of Claims 1 and 2, **characterized in that** the lever (30) has a lever bearing (35) about which the lever (30) is pivotably mounted.

4. Valve according to Claim 3, **characterized in that** the lever bearing (35) subdivides the lever (30) into two lever arms, preferably in a ratio of 1 to 4 to 1, preferably in the range of 1.5 to 2.5 to 1, and more preferably still in a ratio of 1.5 to 1, wherein the longer lever arm has the actuating end (33).

5. Valve according to either of Claims 3 and 4, **characterized in that** the lever bearing (35) is part of a sealing element (36).

6. Valve according to Claim 5, **characterized in that** the sealing element (36) is penetrated by the lever (30), wherein the sealing element (36) encloses the relief end (34) of the lever (30).

7. Valve according to one of the preceding claims, **characterized in that** the relief end (34) interacts with a pressure-relief bore (8) which frees a relief duct (6) which extends as a bypass between the inlet (4) and the outlet (5) of the valve (1).

8. Valve according to one of the preceding claims, **characterized in that** the inlet (4) and the outlet (5) are arranged coaxially to one another along a main valve axis (A), wherein the actuating end (33) is arranged coaxially to the main valve axis (A), and the pressure relief end (34) is arranged so as to be offset with respect to the main valve axis (A).

9. Method for switching a valve (1), in particular a servo valve, having a valve seat (2) which can be closed via a closing element (3) and having a pilot-control valve (20) via which the closing element (3) can be switched between an open and a closed position, wherein the pilot-control valve (20) is switched via a pivotably mounted lever (30) which has an actuating end (33) and a relief end (34), wherein the actuating end (33) is activated via a coil (22), wherein the coil interacts with a permanent magnet in such a way that the actuating end (33) is moved back and forth in a bistable manner between two end positions by brief energization of the coil (22),
**characterized**
**in that** the actuating end (33) is arranged in the dry region of the valve (1), and the relief end (34) is arranged in the fluid-traversed region of the valve (1).

10. Method according to Claim 9, **characterized in that** the valve (1) is formed according to one of Claims 1 to 8.

## Revendications

1. Soupape, en particulier servo-soupape, comprenant un siège de soupape (2) pouvant être fermé par un élément de fermeture (3) et une soupape pilote (20) permettant de commuter l'élément de fermeture (3) entre une position ouverte et une position fermée, la soupape pilote (20) comportant un levier (30) monté à pivotement et destiné à commuter l'élément de fermeture (3), lequel levier comporte une extrémité d'actionnement (33) et une extrémité de détente (34), l'extrémité d'actionnement (33) étant commandée par une bobine (22), la bobine (22) coopérant avec un aimant permanent de telle manière que l'extrémité d'actionnement (33) puisse être déplacée de manière bistable suivant un mouvement alternatif par brève alimentation en courant de la bobine (22) entre deux positions d'extrémité, **caractérisée en ce que**
l'extrémité d'actionnement (33) est disposée dans la région sèche de la soupape (1) et l'extrémité de détente (34) est disposée dans la région de la soupape (1) qui est traversée par un milieu.

2. Soupape selon la revendication 1, **caractérisée en ce que** le levier (30) comporte un noyau (31) et une gaine (32) en matériau d'étanchéité qui enveloppe au moins partiellement le noyau (31).

3. Soupape selon l'une des revendications 1 et 2, **caractérisée en ce que** le levier (30) comporte un palier de levier (35) autour duquel le levier (30) est monté de manière à pouvoir pivoter.

4. Soupape selon la revendication 3, **caractérisée en ce que** le palier à levier (35) divise le levier (30) en deux bras de levier, de préférence dans un rapport allant de 1:1 à 4:1, plus préférablement dans la plage allant de 1,5:1 à 2,5:1 et plus préférablement encore dans un rapport de 1,5:1, le bras de levier le plus long comportant l'extrémité d'actionnement (33).

5. Soupape selon l'une des revendications 3 ou 4, **caractérisée en ce que** le palier de levier (35) fait partie d'un élément d'étanchéité (36).

6. Soupape selon la revendication 5, **caractérisée en ce que** l'élément d'étanchéité (36) est traversé par le levier (30), l'élément d'étanchéité (36) entourant l'extrémité de détente (34) du levier (30).

7. Soupape selon l'une des revendications précédentes, **caractérisée en ce que** l'extrémité de détente (34) coopère avec un alésage de détente de pression (8) qui libère un conduit de détente (6) qui sert de dérivation entre l'entrée (4) et la sortie (5) de la soupape (1).

8. Soupape selon l'une des revendications précédentes, **caractérisée en ce que** l'entrée (4) et la sortie (5) sont disposées coaxialement l'une à l'autre le long d'un axe de soupape principal (A), l'extrémité d'actionnement (33) étant disposée coaxialement à l'axe de soupape principal (A) et l'extrémité de détente (34) étant disposée de manière décalée par rapport à l'axe de soupape principal (A).

9. Procédé de commutation d'une soupape (1), en particulier d'une servo-soupape, comprenant un siège de soupape (2) pouvant être fermé par un élément de fermeture (3) et une soupape pilote (20) permettant de commuter l'élément de fermeture (3) entre une position ouverte et une position fermée, la soupape pilote (20) comportant un levier (30) monté à pivotement qui comporte une extrémité d'actionnement (33) et une extrémité de détente (34), l'extrémité d'actionnement (33) étant commandée par une bobine (22), la bobine (22) coopérant avec un aimant permanent de telle manière que l'extrémité d'actionnement (33) puisse être déplacée de manière bistable suivant un mouvement alternatif par brève alimentation de la bobine (22) en courant entre deux positions d'extrémité, **caractérisé en ce que** l'extrémité d'actionnement (33) est disposée dans la région sèche de la soupape (1) et l'extrémité de détente (34) est disposée dans la région de la soupape (1) qui est traversée par un milieu.

10. Procédé selon la revendication 9, **caractérisé en ce que** la soupape (1) est conçue selon l'une des revendications 1 à 8.
